# EUROPEAN PATENT SPECIFICATION

(11) **EP 3 299 344 B1**
(45) Date of publication and mention of the grant of the patent: **22.07.2020**
(21) Application number: 15892144.5
(22) Date of filing: 18.05.2015
(51) Int. Cl.: C02F 9/06, B63J 4/00, C02F 1/461, C02F 1/467, C02F 1/20, B01D 19/00

(54) **ONLINE ANTIFOULING SHIP BALLAST WATER TREATMENT SYSTEM AND SHIP BALLAST WATER TREATMENT METHOD**
FÄULNISVERHINDERNDES ONLINE-SCHIFFBALLASTWASSERAUFBEREITUNGSSYSTEM UND -SCHIFFSBALLASTWASSERAUFBEREITUNGSVERFAHREN
SYSTÈME DE TRAITEMENT D'EAU DE BALLAST DE NAVIRE ANTISALISSURE EN LIGNE ET PROCÉDÉ DE TRAITEMENT D'EAU DE BALLAST DE NAVIRE

(43) Date of publication of application: 28.03.2018
(73) Proprietor: Sunrui Marine Environment Engineering Co., Ltd., Qingdao, Shandong 266101 (CN)
(72) Inventor: LIU, Guangzhou, Qingdao Shandong 266101 (CN); DUAN, Dongxia, Qingdao Shandong 266101 (CN); YAO, Ping, Qingdao Shandong 266101 (CN)
(74) Representative: Haseltine Lake Kempner LLP
(86) International application number: PCT/CN2015/079172
(87) International publication number: WO 2016/183765

(56) References cited:
- WO-A1-2014/129710
- CN-A- 101 068 750
- CN-A- 101 428 919
- CN-A- 102 502 926
- CN-A- 102 515 400
- CN-A- 103 043 809
- CN-A- 104 817 129
- CN-A- 104 817 214
- CN-U- 202 379 779
- CN-U- 202 430 075
- CN-U- 203 451 322
- CN-U- 204 779 177
- JP-A- 2007 229 577
- JP-A- 2008 188 506
- KR-A- 20110 023 484
- US-A- 4 659 347

## Description

### TECHNICAL FIELD

The present invention relates to ballast water treatment technology for ship, and more particularly to an online antifouling ship ballast water treatment system and ship ballast water treatment method.

### BACKGROUND

During the voyage of a ship, ballasting water is necessary. When ballasting, local aquatic organisms are brought into the ballast tank and then discharged to the destination waterway with the ballast water. The ballast water, carried by the ship from one place to another, causes the spread of harmful aquatic organisms and pathogens. In order to effectively control and prevent the spread of harmful aquatic organisms and pathogens, which were caused by the ballast water of ships, International Marine Organization (IMO) adopted the "International Convention for the Control and Management of Ships' Ballast Water Sediments" in 2004. "The Convention" requires all ships to be equipped with ballast water treatment system on schedule and is applicable retroactively to all present ships. "The Convention" established a standard (also known as D-2 standard) for the ballast water treatment by explicitly stipulating the size and quantity of survivable organisms, and the species and quantity of pathogenic microorganisms in the ballast water as well.

Presently, filtration plus physical or chemical treatment method are used in most of the ballast water treatment systems to inactivate organisms. In the filtration technology, a filter with a filtering accuracy of 50 µ m or 40 µ m is typically used to remove the organisms or particulate matters with large particles, which leads a large amount of marine organisms being adhered to the filter screen. Due to the ballast water treatment system for ships are only used when loading or discharging the ballast water, that is to say, the ballast water treatment system are intermittently used. During the shutdown of the filter, the organisms adhered to the filter screen will multiply, and eventually clog the filter, which is known as fouling problem of the filter.

At present, there is not fully automatic online antifouling method and apparatus at home and abroad, for solving the fouling problem of the filter, and the fouled filter can only be removed and cleaned by hand.

JP2007229577 provides method and apparatus for detoxifying liquid and vessel provided with the apparatus. The apparatus for detoxifying the liquid, which is used for removing the microorganisms in the untreated liquid, is characterized in that an electrolysis promoting agent for increasing the chlorine concentration in the liquid is injected into any portion or several portions of the inside of a storage tank of the liquid electrolyzing unit for producing the chlorine-containing substance from the liquid, the inside of an electrolytic cell and a liquid flow passage between the storage tank and the electrolytic cell.

JP 2008188506 provides an apparatus for making liquid harmless. In the apparatus for making liquid harmless, a centrifugal solid-liquid separator that separates solids by applying a centrifugal force to the liquid, and a filter device that separates residual solids by filtering the liquid are installed, and a liquid electrolytic device for electrolyzing the whole of or a part of the liquid in an electrolytic cell to generate chlorine-containing substances is installed downstream of the centrifugal solid-liquid separator and the filter device in a liquid treatment line, and after the obtained liquid is subjected to the solid-liquid separation treatment by the centrifugal solid-liquid separator and the filter device, the treated liquid is carried into the ballast tank.

WO 2014/129710 A1 provides an in-line treatment apparatus for ballast water having a circulation type pipeline for suppressing biofilm formation, and the apparatus can: supply, to a pre-treatment unit, mixing water of outflow water discharged from an electrolysis unit and inflow water introduced from a front end of the pre-treatment unit through a circulation type pipeline; can reduce the formation of the biofilm by suppressing the growth and proliferation of microorganisms which are attached to and proliferate on the pre-treatment unit provided and operated in a front end of the electrolysis unit and the pipeline thereof in the treatment apparatus for ballast water using the electrolysis unit, and thereby enables a stable management of ballast water by reducing a flow rate and controlling a flow speed and an increase of a load.

US4659347 provides a method and device for purging water from certain contaminants. In order to remove certain contaminants such as hydrocarbons and phenols from water, one or more streams of water to be purged are injected into a vessel in which the pressure is maintained low enough to let the water partly evaporate together with the contaminants at or possibly below room temperature. The vapors are exhausted and the remaining water is led off to a reservoir. The vessel may be provided above the water level with baffles or with a particulate filler serving to delay the removal of the vapors therefrom.

### SUMMARY

Accordingly, the present invention provides an online antifouling ship ballast water treatment system and a ship ballast water treatment method.

The online antifouling ship ballast water treatment system provided by the present invention includes a system according to claim 1.

According to one embodiment of the present invention, the ballast water branch pipeline has a dehydrogenation tank disposed thereon and located at downstream of the electrolytic unit. The seawater electrolyzed by the electrolytic unit is introduced back to the ballast water main pipeline through action of another dispensing pump after the seawater is dehydrogenated by the dehydrogenation tank.

According to one embodiment of the present invention, an atomizing spray is disposed at a center of an upper portion of the dehydrogenation tank, and the dehydrogenation tank further includes flow stirring modules disposed at middle and bottom of the dehydrogenation tank.

According to one embodiment of the present invention, a first valve and a second valve are disposed on the ballast water branch pipeline. The first valve is located between the ballast water main pipeline and an inlet of the electrolytic unit. The second valve is located between the another dispensing pump and the ballast water main pipeline. The first valve, the second valve, and the another dispensing pump are turned on during the process of loading the ballast water.

According to the present invention, the dispensing pipeline is located between the ballast water main pipeline and a waste discharging outlet of the filter. A joint of the ballast water main pipeline and the dispensing pipeline is located at downstream of a joint of an outlet of the ballast water branch pipeline and the ballast water main pipeline.

According to one embodiment of the present invention, a third valve and a fourth valve are disposed on the dispensing pipeline. The dispensing pump is located between the third valve and the fourth valve. The third valve and the fourth valve are turned off during the process of loading the ballast water, and turned on during a dispensing process which is performed after the loading process is finished and turned off when the dispensing pump is stopped.

According to one embodiment of the present invention, the dispensing pipeline is connected to a waste-discharging pipeline through a tee connector. The dispensing pipeline includes a first electromagnetic valve disposed between the tee connector and the fourth valve. The waste-discharging pipeline includes a second electromagnetic valve located at downstream of the tee connector. The first electromagnetic valve is turned off during the loading process and turned on during the dispensing process, the second electromagnetic valve is turned on during the loading process and turned off during the dispensing process.

The ship ballast water treatment method provided by the present invention is defined in claim 7.

According to one embodiment of the present invention, a third valve and a fourth valve are disposed on the dispensing pipeline. The dispensing pump is located between the third valve and the fourth valve. In the ship ballast water treatment method, the third valve and the fourth valve are turned on when the dispensing pump is activated.

According to one embodiment of the present invention, the dispensing pipeline is connected to a waste-discharging pipeline through a tee connector. The dispensing pipeline includes a first electromagnetic valve disposed between the tee connector and the fourth valve. The waste-discharging pipeline includes a second electromagnetic valve disposed at downstream of the tee connector. The ship ballast water treatment method further includes: turning off the first electromagnetic valve and turning on the second electromagnetic valve before the process of loading the ballast water is started, and turning on the first electromagnetic valve and turning off the second electromagnetic valve after the process of loading the ballast water is finished.

Techniques provided in embodiments of the present invention have the following advantages:
In the ship ballast water treatment system and method of the present invention, the TRO solution is introduced back into the filter while ballasting operation finished and kept in the filter until the next ballasting operation start. Therefore, the sodium hypochlorite contained in the TRO solution could inhibit the growth and propagation of the marine organisms in the filter during the shutdown of the filter, so as to prevent the clogging of the filter which are caused by mass growth and multiply of the marine organisms adhered to the filter mesh of the filter during the shutdown of the filter.

The aforementioned description is a conceptual overview of the present invention. In order to make the technique of the present invention be clearly understood and enable in accordance with specification, and the above or other aspects, features and advantages of the present invention become apparent, embodiments and detailed descriptions in conjunction with the accompanying drawings are provided hereafter.

### BRIEF DESCRIPTION OF THE DRAWINGS

FIG. 1 schematically shows a block diagram of a ballast water treatment system of the present invention.
FIG. 2 schematically shows a structural diagram of a dehydrogenation tank provided in the present invention.
FIG. 3 schematically shows a top view of the flow stirring module illustrated in FIG. 2.
FIG. 4 schematically shows a front view of the flow stirring module illustrated in FIG. 2.

### DETAILED DESCRIPTION OF PREFERRED EMBODIMENTS

In order to further illustrate the techniques and effect of the present invention adopted for achieving the aspects, exemplary embodiments, structure, features and the effects of the ship ballast water treatment system and method according to the present invention will be described thoroughly in conjunction with the accompanying drawings and the preferred embodiments.

The foregoing or other techniques, features and effects of the present invention will become apparent in the following detailed descriptions of the preferred embodiments in conjunction with the accompanying drawings. In view of descriptions of exemplary embodiments, the techniques and effects of the present invention adopted for achieving aspects will be further and specifically understood. The accompanying drawings are merely used for illustration and description, but not used to limit the present invention.

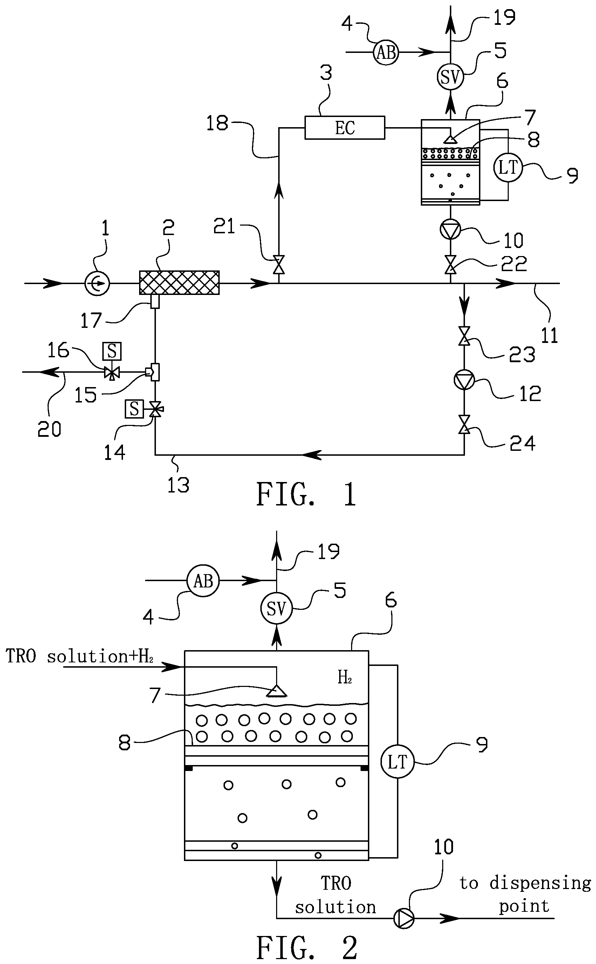

Please referring to FIG. 1, an online antifouling ship ballast water treatment system according to an embodiment of the present invention includes a ballast water main pipeline 11, a ballast water branch pipeline 18, a hydrogen-discharging pipeline 19, a dispensing pipeline 13 and a waste-discharging pipeline 20, a ballast pump 1 and a filter 2 located on the ballast water main pipeline 11, an electrolytic unit 3, a dehydrogenation tank 6, a first valve 21, a second valve 22 and a first dispensing pump 10 located on the ballast water branch pipeline 18, a gas-liquid separator 5 and an explosion-proof blower 4 located on the hydrogen-discharging pipeline 19, a third valve 23, a fourth valve 24, a second dispensing pump 12, a tee connector 15 and a first electromagnetic valve 14 located on and connected to the dispensing pipeline 13, and a second electromagnetic valve 16 located on the waste-discharging pipeline 20. In one embodiment, the first through the fourth valves 21-24 are preferably manual valves.

Specifically, the ballast pump 1 and the filter 2 are sequentially disposed along and connected to the ballast water main pipeline 11.

The electrolytic unit 3 and the dehydrogenation tank 6 are sequentially disposed along and connected to the ballast water branch pipeline 18, and the joint of the inlet of the ballast water branch pipeline 18 and the ballast water main pipeline 11 is located at the downstream of the filter 2.

The first valve 21 is disposed on and connected to the ballast water main pipeline 18 and located between the ballast water main pipeline 11 and the inlet of the electrolytic unit 3. The electrolytic unit 3 is electrically connected to a control unit (not shown in drawings) of the ship ballast water treatment system, so as to electrolyze seawater under control of the control unit and produce a mixture of TRO solution containing sodium hypochlorite and hydrogen gas.

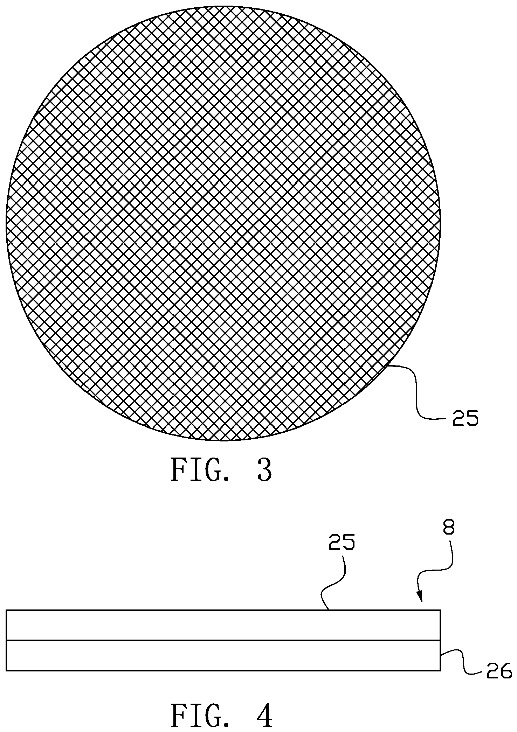

The inlet of the dehydrogenation tank 6 is connected to the outlet of the electrolytic unit 3. Please referring to FIG. 2 to FIG. 4 together, the dehydrogenation tank 6 is made of carbon steel, the volume of the dehydrogenation tank 6 is substantially equals to the amount of TRO solution flowing into the tank within 1 min (for example, if the flow rate of TRO solution is 6m³/h, the volume of the dehydrogenation tank 6 should be around 100L), the ratio of the diameter to the height of the tank is preferably 3:4, the thickness of the wall of the tank is approximately 3 to 4mm, and sealant is applied inside the tank to prevent corrosion caused by TRO solution. A liquid inlet of the dehydrogenation tank 6 is extended across to the center of upper portion of the dehydrogenation tank 6 through a jetting pipeline, an atomizing spray 7 is provided at the liquid inlet of the dehydrogenation tank 6, hydrogen gas mixed with the TRO solution, which is conducted to the dehydrogenation tank 6, can be separated from the TRO solution rapidly through atomization of the atomizing spray 7. The atomizing spray 7 spaces a distance of around 10cm from the top of the tank in the height direction of the dehydrogenation tank 6, moreover, in order to ensure effect of atomization, the internal pressure of the jetting pipeline and the atomizing spray 7 is preferably in a range of approximately from 43.5 to 50.75 PSI (Pounds per square inch) (43.5 to 50.75 PSI substantially equals 3 to 3.5 Bar). After being atomized and sprayed through the atomizing spray 7, most of the hydrogen gas in the TRO solution is removed, but a few of the smaller bubbles is still contained in the TRO solution.

To further increase dehydrogenation efficiency and remove the small bubbles remained in the TRO solution, the present invention further provides two flow stirring modules 8 (respectively called the first flow stirring module and the second flow stirring module hereafter) at the middle and the bottom of the dehydrogenation tank 6. In one embodiment, these two flow stirring modules 8 are both composed of stainless steel mesh, and each includes at least one layer of flow stirring mesh 25 and a support 26 of flow stirring mesh for supporting and fastening the at least one flow stirring mesh 25. In this embodiment, the flow stirring mesh 25 and the support 26 of flow stirring mesh are both made of stainless steel type 316L, and each of the flow stirring modules 8 includes at least two layers of flow stirring mesh 25. Specifically, in one embodiment, each of the flow stirring modules 8 includes three layers of flow stirring mesh 25 and these three layers of flow stirring mesh 25 are fixed and fastened together through the support 26 of flow stirring mesh by soldering. The mesh size of the first flow stirring module is approximately 5 by 5mm, the mesh size of the second flow stirring module is approximately 2 by 2mm, each support 26 of flow stirring mesh fixes the corresponding flow stirring meshes 25 together and remains a distance of approximately 10 to 20mm (preferably 10mm) between adjacent layers. Understandably, in other embodiments of the present invention, the mesh sizes of the first flow stirring module and the second flow stirring module can be other appropriate numbers only if the mesh size of the first flow stirring module is greater than the mesh size of the second flow stirring module, and both of the first flow stirring module and the second flow stirring module could facilitate to accumulate and separate hydrogen gas from the TRO solution. Definitely, in one embodiment of the present invention, the mesh sizes of the first flow stirring module and the second flow stirring module could equal to each other, for example the mesh sizes both are 5 by 5mm or 2 by 2mm.

Please continue to refer to FIG. 1 and FIG. 2, the gas-liquid separator 5 is disposed on and connected to the hydrogen discharging pipeline 19 and is connected to an air outlet disposed on the top of the dehydrogenation tank 6. The explosion-proof blower 4 is located at the downstream of the gas-liquid separator 5, and the air introduced by the explosion-proof blower 4 is mixed with the gas passing through the gas-liquid separator 5, so that the hydrogen gas separated by the dehydrogenation tank is diluted to a concentration below the explosion threshold, and then discharged over the board of the ships. The first dispensing pump 10 is connected to a liquid outlet at the bottom of the dehydrogenation tank 6, and connected to the ballast water main pipeline 11 through the second valve 22, the dehydrogenated TRO solution is injected into the dispensing point of the ballast water main pipeline 11 through the first dispensing pump 10. In addition, a level gauge 9 is disposed at one side of the dehydrogenation tank 6, the level gauge 9 is capable of remote communicating with the control unit, so that the level of the liquid inside the dehydrogenation tank 6 could be controlled between 1/2 to 3/4 of the total height of the dehydrogenation tank 6 through the cooperation of the control unit, the level gauge 9 and the first dispensing pump 10. In order to better control the level of the liquid inside the dehydrogenation tank 6, the first dispensing pump 10 is preferably a variable frequency dispensing pump.

The second dispensing pump 12, the third valve 23, the fourth valve 24, the tee connector 15 and the first electromagnetic valve 14 are disposed on and connected to the dispensing pipeline 13. The joint of the dispensing pipeline 13 and the ballast water main pipeline 11 is located at the downstream of the joint of the outlet of the ballast water branch pipeline 18 and the ballast water main pipeline 11. The third valve 23 is located close to the ballast water main pipeline 11 and between the ballast water main pipeline 11 and the second dispensing pump 12. The second dispensing pump 12 is located between the third valve 23 and the fourth valve 24. The first electromagnetic valve 14 is located at the downstream of the fourth valve 24, and between the fourth valve 24 and the tee connector 15. The tee connector 15 is located between the first electromagnetic valve 14 and a waste discharging outlet 17 of the filter 2. The second electromagnetic valve 16 is located on the waste-discharging pipeline 20 and connected the tee connector 15 to the outside of the ship.

The operation principle of the ship ballast water treatment system of the present invention is: when the system is loading the ballast water, seawater is pumped into the filter 2 by the ballast pump 1, after the seawater is filtrated through the filter 2, the filtration passes through the waste-discharging outlet 17 of the filter 2, the tee connector 15 and the second electromagnetic valve 16, and then is discharged over the board of the ships, and the filtrated seawater is conducted to the ballast water main pipeline 11. A portion of the seawater in the ballast water main pipeline 11 is introduced directly into the ballast tank while the other portion is conducted to the electrolytic unit 3 and electrolyzed to produce TRO solution and hydrogen gas. The TRO solution mixed with hydrogen gas is transferred to the dehydrogenation tank 6 and the hydrogen gas is separated from the TRO solution by the dehydrogenation tank 6. After the hydrogen gas is further separated through the gas-liquid separator 5, it is mixed and diluted with the air introduced by the explosion-proof blower 4 and is discharged over the board of the ships while the dehydrogenated TRO solution is introduced back into the ballast water main pipeline 11 through the action of the first dispensing pump 10. When the process of loading ballast water is finished (i.e. when the ballast pump 1 stops working), turning on the third valve 23, the fourth valve 24, the first electromagnetic valve 14 and the second dispensing pump 12, and turning off the second electromagnetic valve 16, so that a certain amount of the seawater which was filtrated, electrolyzed and dehydrogenated, is pumped from the ballast water main pipeline 11 by the second dispensing pump 12 and is introduced into the filter 2 through the waste-discharging outlet 17. After the second dispensing pump 12 operates for a certain period, turning off the second dispensing pump 12 and the valves connected to the waste-discharging outlet 17 of the filter 2 (i.e., the third valve 23, the fourth valve 24 and the first electromagnetic valve 14), and keeping the treated seawater in the filter 2 until next loading.

In summary, the ship ballast water treatment system of the present invention includes at least one of the following advantages :

In the ship ballast water treatment system of the present invention, the TRO solution is introduced back into the filter 2 while the ballasting operation finished and kept in the filter 2 until the next ballasting operation start. Therefore, the sodium hypochlorite contained in the TRO solution could inhibit the growth and propagation of the marine organisms in the filter 2 during the shutdown of the ballast pump 1, so as to prevent the clogging of the filter 2 which are caused by mass growth and multiply of the marine organisms adhered to the filter mesh of the filter 2 during the shutdown of the filter 2.

In the end, exemplary embodiments are provided hereafter to describe the achievements of the present invention:

### Exemplary embodiment one:

The antifouling technique of the present invention is used in a chemical cargo ship of 72000DWT, whose rated treatment amount of the ballast pump 1 is 2000m³/h. The arrangement of the present ship ballast water treatment system is shown in FIG. 1.

In the ship ballast water treatment system, a tee connector 15 is disposed at the waste discharging outlet 17 of the filter 2. When the process of loading ballast water is finished (i.e. when the ballast pump 1 stops working), a certain amount of the seawater, which was filtrated and electrolyzed by the electrolytic cell 3, is pumped from the ballast water main pipeline 11 by the second dispensing pump 12 and is introduced into the filter 2 through the dispensing pipeline 13 and the tee connector 15. After the second dispensing pump 12 operates for three minutes, turning off the valves connected to the waste discharging outlet 17 of the filter 2 (i.e., the third valve 23, the fourth valve 24 and the first electromagnetic valve 14) while the dispensing pump 12 stops working, and keeping the treated seawater in the filter 2 until next loading.

After the ballast water treatment system being used in the ships for two years, the filter 2 is never clogged up or the filtration capability of the filter 2 is never weakened because of the fouling of the filter 2. The filter 2 is opened and checked after two years, there is not organisms being adhered to the filter mesh of the filter 2, and therefore, there is no need to clean the filter mesh of the filter 2 by hand.

### Exemplary embodiment two:

The antifouling technique of the present invention is used in an ore ship of 35000DWT, whose rated treatment amount of the ballast pump 1 is 4000m³/h. The arrangement of the present ship ballast water treatment system is shown in FIG. 1.

In the ship ballast water treatment system, a tee connector 15 is disposed at the waste discharging outlet 17 of the filter 2. When the process of loading ballast water is finished (i.e. when the ballast pump 1 stops working), a certain amount of the seawater, which was filtrated and electrolyzed by the electrolytic cell 3, is pumped from the ballast water main pipeline 11 by the second dispensing pump 12 and is introduced into the filter 2 through the dispensing pipeline 13 and the tee connector 15. After the second dispensing pump 12 operates for four minutes, turning off the valves connected to the waste discharging outlet 17 of the filter 2 (i.e., the third valve 23, the fourth valve 24 and the first electromagnetic valve 14) while the dispensing pump 12 stops working, and keeping the treated seawater in the filter 2 until next loading.

After the ballast water treatment system being used in the ships for two years, the filter 2 is never clogged up or the filtration capability of the filter 2 is never weakened because of the fouling of the filter 2. The filter 2 is opened and checked after two years, there is not organisms being adhered to the filter mesh of the filter 2, and therefore, there is no need to clean the filter mesh of the filter 2 by hand.

### Exemplary embodiment three:

The antifouling technique of the present invention is used in a bulk ship of 18000DWT, whose rated treatment amount of the ballast pump 1 is 3000m³/h. The arrangement of the present ship ballast water treatment system is shown in FIG. 1.

In the ship ballast water treatment system, a tee connector 15 is disposed at the waste discharging outlet 17 of the filter 2. When the process of loading ballast water is finished (i.e. when the ballast pump 1 stops working), a certain amount of the seawater, which was filtrated and electrolyzed by the electrolytic cell 3, is pumped from the ballast water main pipeline 11 by the second dispensing pump 12 and is introduced into the filter 2 through the dispensing pipeline 13 and the tee connector 15. After the second dispensing pump 12 operates for five minutes, turning off the valves connected to the waste discharging outlet 17 of the filter 2 (i.e., the third valve 23, the fourth valve 24 and the first electromagnetic valve 14) while the dispensing pump 12 stops working, and keeping the treated seawater in the filter 2 until next loading.

After the ballast water treatment system being used in the ships for two years, the filter 2 is never clogged up or the filtration capability of the filter 2 is never weakened because of the fouling of the filter 2. The filter 2 is opened and checked after two years, there is not organisms being adhered to the filter mesh of the filter 2, and therefore, there is no need to clean the filter mesh of the filter 2 by hand.

The descriptions above are embodiments of the present invention only and are not used, by any way, to limit the present invention. Although the present invention has been described with reference to the above embodiments, those embodiments are not used to limit the present invention, it will be apparent to anyone of ordinary skill in the art that slight changes or modifications to the described embodiments may be made to become equivalent embodiments without departing from the technique scope of the present invention. On the contrary, any slight and simple changes, equivalent variations and modifications according to the disclosure of the present invention should fall within the technique scope of the present invention.

### Industrial Applicability

In the ship ballast water treatment system and method of the present invention, the TRO solution is introduced back into the filter while ballasting operation finished and kept in the filter until the next ballasting operation start. Therefore, the sodium hypochlorite contained in the TRO solution could inhibit the growth and propagation of the marine organisms in the filter during the shutdown of the ballast pump, so as to prevent the clogging of the filter which are caused by mass growth and multiply of the marine organisms adhered to the filter mesh of the filter during the shutdown of the filter.

## Claims

1. An online antifouling ship ballast water treatment system, comprising a ballast water main pipeline (11), a ballast water branch pipeline (18), a filter (2) located on the ballast water main pipeline (11), and an electrolytic unit (3) located on the ballast water branch pipeline (18), a joint of an inlet of the ballast water branch pipeline (18) and the ballast water main pipeline (11) being located downstream of the filter (2), wherein the ship ballast water treatment system further comprises a dispensing pipeline (13) and a dispensing pump (12) located on the dispensing pipeline (13), the dispensing pipeline (13) being located between the ballast water main pipeline (11) and a waste discharging outlet (17) of the filter (2), and a joint of the ballast water main pipeline (11) and the dispensing pipeline (13) being located downstream of a joint of an outlet of the ballast water branch pipeline (18) and the ballast water main pipeline (11).

2. The online antifouling ship ballast water treatment system of claim **1**, wherein the ballast water branch pipeline (18) has a dehydrogenation tank (6) disposed thereon and located at downstream of the electrolytic unit (3), the seawater electrolyzed by the electrolytic unit (3) is introduced back to the ballast water main pipeline (11) through action of another dispensing pump (10) after the seawater is dehydrogenated by the dehydrogenation tank (6).

3. The online antifouling ship ballast water treatment system of claim **2**, wherein an atomizing spray (7) is disposed at a center of an upper portion of the dehydrogenation tank (6), and the dehydrogenation tank (6) further comprises flow stirring modules (8) disposed at middle and bottom of the dehydrogenation tank (6).

4. The online antifouling ship ballast water treatment system of claim **2**, wherein a first valve (21) and a second valve (22) are disposed on the ballast water branch pipeline (18), the first valve (21) is located between the ballast water main pipeline (11) and an inlet of the electrolytic unit (3), the second valve (22) is located between the another dispensing pump (10) and the ballast water main pipeline (11), the first valve (21), the second valve (22), and the another dispensing pump (10) are turned on during the process of loading the ballast water.

5. The online antifouling ship ballast water treatment system of claim **1**, wherein a third valve (23) and a fourth valve (24) are disposed on the dispensing pipeline (13), the dispensing pump (12) is located between the third valve (23) and the fourth valve (24), the third valve (23) and the fourth valve (24) are turned off during the process of loading the ballast water, and turned on during a dispensing process which is performed after the loading process is finished and turned off when the dispensing pump (12) is stopped.

6. The online antifouling ship ballast water treatment system of claim **5**, wherein the dispensing pipeline (13) is connected to a waste-discharging pipeline (20) through a tee connector (15), the dispensing pipeline (13) comprises a first electromagnetic valve (14) disposed between the tee connector (15) and the fourth valve (24), the waste-discharging pipeline (20) comprises a second electromagnetic valve (16) located at downstream of the tee connector (15), the first electromagnetic valve (14) is turned off during the loading process and turned on during the dispensing process, the second electromagnetic valve (16) is turned on during the loading process and turned off during the dispensing process.

7. An online antifouling ship ballast water treatment method being conducted by the online antifouling ship ballast water treatment system of any one of claims 1 to 6, wherein the method comprises the following steps:
turning on the dispensing pump (12) after a process of loading ballast water is finished, and pumping a portion of seawater electrolyzed by the electrolytic unit (3) of the ship ballast water treatment system from the ballast water main pipeline (11) by the dispensing pump (12), and introducing the seawater from the dispensing pipeline (13) back into the filter (2) through the waste discharging outlet (17) of the filter (2);
keeping the introduced seawater in the filter (2) until a next loading operation.

8. The ship ballast water treatment method of claim **7**, wherein a third valve (23) and a fourth valve (24) are disposed on the dispensing pipeline (13), the dispensing pump (12) is located between the third valve (23) and the fourth valve (24), in the ship ballast water treatment method, the third valve (23) and the fourth valve (24) are turned on when the dispensing pump (12) is activated.

9. The ship ballast water treatment method of claim **8**, wherein the dispensing pipeline (13) is connected to a waste-discharging pipeline (20) through a tee connector (15), the dispensing pipeline (13) comprises a first electromagnetic valve (14) disposed between the tee connector (15) and the fourth valve (24), the waste-discharging pipeline (20) comprises a second electromagnetic valve (16) disposed at downstream of the tee connector (15),
the ship ballast water treatment method further comprises turning off the first electromagnetic valve (14) and turning on the second electromagnetic valve (16) before the process of loading the ballast water is started;
the ship ballast water treatment method further comprises turning on the first electromagnetic valve (14) and turning off the second electromagnetic valve (16) after the process of loading the ballast water is finished.

## Patentansprüche

1. Anwuchsverhinderndes Online-Schiffsballastwasseraufbereitungssystem, umfassend eine Ballastwasserhauptleitung (11), eine Ballastwasserabgangsleitung (18), einen in der Ballastwasserhauptleitung (11) angeordneten Filter (2) und einen in der Ballastwasserabgangsleitung (18) angeordneten Elektrolyseapparat (3), wobei der Einlass der Ballastwasserabgangsleitung (18) und die Ballastwasserhauptleitung (11) stromabwärts des Filter (2) verbunden sind, wobei das Schiffsballastwasseraufbereitungssystem ferner eine Dosierleitung (13) und eine in der Dosierleitung (13) angeordnete Dosierpumpe (12) umfasst, wobei die Dosierleitung (13) zwischen Ballastwasserhauptleitung (11) und Abwasserabflussöffnung (17) des Filters (2) angeordnet ist und sich eine Verbindung von Ballastwasserhauptleitung (11) und Dosierleitung (13) stromabwärts einer Auslassverbindung von Ballastwasserabgangsleitung (18) und Ballastwasserhauptleitung (11) befindet.

2. Anwuchsverhinderndes Online-Schiffsballastwasseraufbereitungssystem gemäß Anspruch 1, wobei die Ballastwasserabgangsleitung (18) einen auf dieser und stromabwärtsdes Elektrolyseapparates (3) angeordneten Dehydrierungstank (6) aufweist, wobei das vom Elektrolyseapparat (3) elektrolysierte Meerwasser durch die Wirkung einer anderen Dosierpumpe (10) wieder in die Ballastwasserhauptleitung (11) zurückgeführt wird, nachdem das Meerwasser durch den Dehydrierungstank (6) dehydriert wurde.

3. Anwuchsverhinderndes Online-Schiffsballastwasseraufbereitungssystem gemäß Anspruch 2, wobei ein pneumatisches Sprühgerät (7) im oberen Abschnitt des Dehydrierungstanks (6) mittig angeordnet ist und der Dehydrierungstank (6) ferner in der Mitte und am Boden des Dehydrierungstanks (6) angeordnete Strömungsrührmodule (8) umfasst.

4. Anwuchsverhinderndes Online-Schiffsballastwasseraufbereitungssystem gemäß Anspruch 2, wobei ein erstes Ventil (21) und ein zweites Ventil (22) an der Ballastwasserabgangsleitung (18) angeordnet sind, wobei sich das erste Ventil (21) zwischen der Ballastwasserhauptleitung (11) und einem Einlass des Elektrolyseapparats (3) befindet, wobei sich das zweite Ventil (22) zwischen der anderen Dosierpumpe (10) und der Ballastwasserhauptleitung (11) befindet und wobei das erste Ventil (21), das zweite Ventil (22) und die andere Dosierpumpe (10) während des Ballastwasser-Ladevorgangs eingeschaltet werden.

5. Anwuchsverhinderndes Online-Schiffsballastwasseraufbereitungssystem gemäß Anspruch 1, wobei an der Dosierleitung (13) ein drittes Ventil (23) und ein viertes Ventil (24) angeordnet sind, wobei sich die Dosierpumpe (12) zwischen dem dritten Ventil (23) und dem vierten Ventil (24) befindet, wobei das dritte Ventil (23) und das vierte Ventil (24) während des Ballastwasser-Ladevorgangs ausgeschaltet und während des nach Beendigung des Ladevorgangs durchgeführten Dosiervorgangs eingeschaltet sowie beim Anhalten der Dosierpumpe (12) ausgeschaltet werden.

6. Anwuchsverhinderndes Online-Schiffsballastwasseraufbereitungssystem gemäß Anspruch 5, wobei die Dosierleitung (13) über einen T-Verbinder (15) mit einer Abwasserleitung (20) verbunden ist, wobei die Dosierleitung (13) ein zwischen dem T-Verbinder (15) und dem vierten Ventil (24) angeordnetes erstes elektromagnetisches Ventil (14) umfasst, wobei die Abwasserleitung (20) ein stromabwärts des T-Verbinders (15) angeordnetes zweites elektromagnetisches Ventil (16) umfasst, wobei das erste elektromagnetische Ventil (14) während des Ladevorgangs ausgeschaltet und während des Dosiervorgangs eingeschaltet wird, wobei das zweite elektromagnetische Ventil (16) während des Ladevorgangs eingeschaltet und während des Dosiervorgangs ausgeschaltet wird.

7. Von dem anwuchsverhindernden Online-Schiffsballastwasseraufbereitungssystem gemäß einem der Ansprüche 1 bis 6 durchgeführtes anwuchsverhinderndes Online-Schiffsballastwasseraufbereitungsverfahren, wobei das Verfahren die folgenden Schritte umfasst:
die Dosierpumpe (12) nach Beendigung eines Ballastwasser-Ladevorgangs einschalten und einen Teil des vom Elektrolyseapparat (3) des Schiffsballastwasseraufbereitungssystems elektrolysierten Meerwassers mit der Dosierpumpe (12) aus der Ballastwasserhauptleitung (11) pumpen und das Meerwasser durch die Abwasserabflussöffnung (17) des Filters (2) aus der Dosierleitung (13) zurück in den Filter (2) leiten;
das eingebrachte Meerwasser bis zu einem nächsten Ladevorgang im Filter (2) halten.

8. Schiffsballastwasseraufbereitungsverfahren gemäß Anspruch 7, wobei an der Dosierleitung (13) ein drittes Ventil (23) und ein viertes Ventil (24) angeordnet sind, wobei sich die Dosierpumpe (12) zwischen dem dritten Ventil (23) und dem vierten Ventil (24) befindet, wobei das dritte Ventil (23) und das vierte Ventil (24) im Schiffsballastwasseraufbereitungsverfahren eingeschaltet werden, wenn die Dosierpumpe (12) eingeschaltet wird.

9. Schiffsballastwasseraufbereitungsverfahren gemäß Anspruch 8, wobei die Dosierleitung (13) über einen T-Verbinder (15) mit einer Abwasserleitung (20) verbunden ist, wobei die Dosierleitung (13) ein zwischen dem T-Verbinder (15) und dem vierten Ventil (24) angeordnetes erstes elektromagnetisches Ventil (14) umfasst, wobei die Abwasserleitung (20) ein stromabwärts des T-Verbinder (15) angeordnetes zweites elektromagnetisches Ventil (16) umfasst,
wobei das Schiffsballastwasseraufbereitungsverfahren ferner umfasst, das erste elektromagnetische Ventil (14) auszuschalten und das zweite elektromagnetische Ventil (16) einzuschalten, bevor der Ballastwasser-Ladevorgang gestartet wird;
wobei das Schiffsballastwasseraufbereitungsverfahren ferner umfasst, das erste elektromagnetische Ventil (14) einzuschalten und das zweite elektromagnetische Ventil (16) auszuschalten, nachdem der Ballastwasser-Ladevorgang beendet wurde.

## Revendications

1. Un système de traitement d'eau de ballast de navire antisalissure en ligne, comprenant une conduite principale d'eau de ballast (11), une conduite de ramification d'eau de ballast (18), un filtre (2) situé sur la conduite principale d'eau de ballast (11), et une unité électrolytique (3) située sur la conduite de ramification d'eau de ballast (18), un joint d'une entrée de la conduite de ramification d'eau de ballast (18) et de la conduite principale d'eau de ballast (11) étant situé en aval du filtre (2), dans lequel
le système de traitement d'eau de ballast de navire comprend en outre une conduite de distribution (13) et une pompe de distribution (12) située sur la conduite de distribution (13), la conduite de distribution (13) étant située entre la conduite principale d'eau de ballast (11) et une sortie d'évacuation des déchets (17) du filtre (2), et un joint de la conduite principale d'eau de ballast (11) et de la conduite de distribution (13) étant situé en aval d'un joint d'une sortie de la conduite de ramification d'eau de ballast (18) et de la conduite principale d'eau de ballast (11).

2. Le système de traitement d'eau de ballast de navire antisalissure en ligne selon la revendication 1, dans lequel la conduite de ramification d'eau de ballast (18) a un réservoir de déshydrogénation (6) disposé sur celle-ci et situé en aval de l'unité électrolytique (3), l'eau de mer électrolysée par l'unité électrolytique (3) est réintroduite dans la conduite principale d'eau de ballast (11) à travers l'action d'une autre pompe de distribution (10) après que l'eau de mer est déshydrogénée par le réservoir de déshydrogénation (6).

3. Le système de traitement d'eau de ballast de navire antisalissure en ligne selon la revendication 2, dans lequel un pulvérisateur d'atomisation (7) est disposé à un centre d'une partie supérieure du réservoir de déshydrogénation (6), et le réservoir de déshydrogénation (6) comprend en outre des modules d'agitation d'écoulement (8) disposés au milieu et au fond du réservoir de déshydrogénation (6).

4. Le système de traitement d'eau de ballast de navire antisalissure en ligne selon la revendication 2, dans lequel une première valve (21) et une deuxième valve (22) sont disposées sur la conduite de ramification d'eau de ballast (18), la première valve (21) est située entre la conduite principale d'eau de ballast (11) et une entrée de l'unité électrolytique (3), la deuxième valve (22) est située entre l'autre pompe de distribution (10) et la conduite principale d'eau de ballast (11), la première valve (21), la deuxième valve (22), et l'autre pompe de distribution (10) sont ouvertes pendant le processus de chargement de l'eau de ballast.

5. Le système de traitement d'eau de ballast de navire antisalissure en ligne selon la revendication 1, dans lequel une troisième valve (23) et une quatrième valve (24) sont disposées sur la conduite de distribution (13), la pompe de distribution (12) est située entre la troisième valve (23) et la quatrième valve (24), la troisième valve (23) et la quatrième valve (24) sont fermées pendant le processus de chargement de l'eau de ballast, et ouvertes pendant un processus de distribution qui est effectué après que le processus de chargement est terminé et fermées lorsque la pompe de distribution (12) est arrêtée.

6. Le système de traitement d'eau de ballast de navire antisalissure en ligne selon la revendication 5, dans lequel la conduite de distribution (13) est reliée à une conduite d'évacuation des déchets (20) à travers un raccord en T (15), la conduite de distribution (13) comprend une première valve électromagnétique (14) disposée entre le raccord en T (15) et la quatrième valve (24), la conduite d'évacuation des déchets (20) comprend une deuxième valve électromagnétique (16) située en aval du raccord en T (15), la première valve électromagnétique (14) est fermée pendant le processus de chargement et ouverte pendant le processus de distribution, la deuxième valve électromagnétique (16) est ouverte pendant le processus de chargement et fermée pendant le processus de distribution.

7. Un procédé de traitement d'eau de ballast de navire antisalissure en ligne étant conduit par le système de traitement d'eau de ballast de navire antisalissure en ligne selon l'une quelconque des revendications 1 à 6, dans lequel le procédé comprend les étapes suivantes :
l'ouverture de la pompe de distribution (12) après qu'un processus de chargement d'eau de ballast est terminé, et le pompage d'une partie de l'eau de mer électrolysée par l'unité électrolytique (3) du système de traitement d'eau de ballast de navire à partir de la conduite principale d'eau de ballast (11) par la pompe de distribution (12), et la réintroduction de l'eau de mer à partir de la conduite de distribution (13) dans le filtre (2) à travers la sortie d'évacuation des déchets (17) du filtre (2) ;
le maintien de l'eau de mer introduite dans le filtre (2) jusqu'à une opération de chargement suivante.

8. Le procédé de traitement d'eau de ballast de navire selon la revendication 7, dans lequel une troisième valve (23) et une quatrième valve (24) sont disposées sur la conduite de distribution (13), la pompe de distribution (12) est située entre la troisième valve (23) et la quatrième valve (24), dans le procédé de traitement d'eau de ballast de navire, la troisième valve (23) et la quatrième valve (24) sont ouvertes lorsque la pompe de distribution (12) est activée.

9. Le procédé de traitement d'eau de ballast de navire selon la revendication 8, dans lequel la conduite de distribution (13) est reliée à une conduite d'évacuation des déchets (20) à travers un raccord en T (15), la conduite de distribution (13) comprend une première valve électromagnétique (14) disposée entre le raccord en T (15) et la quatrième valve (24), la conduite d'évacuation des déchets (20) comprend une deuxième valve électromagnétique (16) disposée en aval du raccord en T (15),
le procédé de traitement d'eau de ballast de navire comprend en outre la fermeture de la première valve électromagnétique (14) et l'ouverture de la deuxième valve électromagnétique (16) avant que le processus de chargement de l'eau de ballast ne soit lancé ;
le procédé de traitement d'eau de ballast de navire comprend en outre l'ouverture de la première valve électromagnétique (14) et la fermeture de la deuxième valve électromagnétique (16) après que le processus de chargement de l'eau de ballast est terminé.
